# EUROPEAN PATENT APPLICATION

(11) **EP 3 124 287 A1**
(43) Date of publication of application: **01.02.2017**
(21) Application number: 15178446.9
(22) Date of filing: 27.07.2015
(51) Int. Cl.: B60B 21/02, B60B 1/00, B60B 1/04, B60B 21/06, B60B 21/12

(54) **RIM STRUCTURE FOR BIKE**

(71) Applicant: Alex Global Technology, Inc., Tainan City (TW)
(72) Inventor: Chen, Wei-Chin, Tainan City (TW)
(74) Representative: Lang, Christian

(57) **Abstract**

A rim structure for a bike is revealed. A rim (1) comprises two side walls (11), a connection wall (12) for connecting opposite end faces of the two side walls (11), an inner wall (13) for connecting the inner edges of the two side walls (11), and a space (14) defined by the two side walls (11), the connection wall (12) and the inner wall (13). The inner wall (13) has a plurality of evenly-spaced spokes (2) thereon, each of which has a head (21) located inside the space (14). The space (14) is filled with a foam material.

## Description

### BACKGROUND OF THE INVENTION

### 1. Fields of the invention

The present invention relates to a rim structure for a bike, especially for a structure having a light weight and plural spokes to promote the effect of strength and steadiness thereof.

### 2. Descriptions of Related Art

In addition to being a vehicle, a bicycle has the functions of leisure and sport. The innovations of the bicycle focus on its appearance, comfort index, body strength, weight, speed and so on with the progress of the technology. Especially for cyclists of riding professional racing bicycles, what they pursue are improving comfort of riding, enhanced body strength, light weight and high speed.

In order to reduce the weight of the bicycle, a carbon fiber reinforced resin has been developed and used as a material of bicycle rim and components to replace a traditional metal material. However, the carbon fiber reinforced resin still cannot meet the demand for weight reduction. Accordingly, some bicycle related industries further improve material of the bike structure. For instance, a Taiwan patent No. M268199 U, issued on 21st Jun. 2005, has disclosed an improved bicycle wheel rim structure made by carbon fiber.

### SUMMARY OF THE INVENTION

In view of the above-mentioned problems, the object of the present invention is to provide a rim structure for a bike, especially for a lightweight structure having improved strength and steadiness of spokes.

Disclosed herein is a rim structure for a bike. The rim comprises two side walls, a connection wall for connecting opposite end faces of the two side walls, an inner wall for connecting the inner edges of the two side walls, and a space defined by the two side walls, the connection wall and the inner wall, wherein the inner wall has a plurality of evenly-spaced spokes thereon, each of which has a head located inside the space, and wherein the space is filled with a foam material to form an inner foam layer. Accordingly, the foam material filled in the space secures the heads of the plurality of spokes, which promotes the strength and steadiness of the spokes after being installed on the rim.

According to an embodiment of the present invention, the connection wall has a hole for filling the foam material.

According to an embodiment of the present invention, the foam material of the inner foam layer is selected from a group consisting of polystyrene, polypropylene, polyvinyl chloride, phenoplastics, and polyurethane.

According to an embodiment of the present invention, the rim is made of aluminum alloy, titanium alloy, magnesium alloy or carbon fiber.

### BRIEF DESCRIPTION OF THE DRAWINGS

FIG. 1 is a partial sectional view showing a rim structure for a bike according to the present invention;
FIG. 2 is a sectional view showing a rim structure for a bike according to the present invention;
FIG. 3 is a curve diagram showing a result of three point bending test of an aluminum rim and an aluminum rim filled with the foam material therein.

### DETAILED DESCRIPTION OF THE PREFERRED EMBODIMENT

Hereinafter, an exemplary embodiment of the present invention will be described in detail with reference to the accompanying drawings.

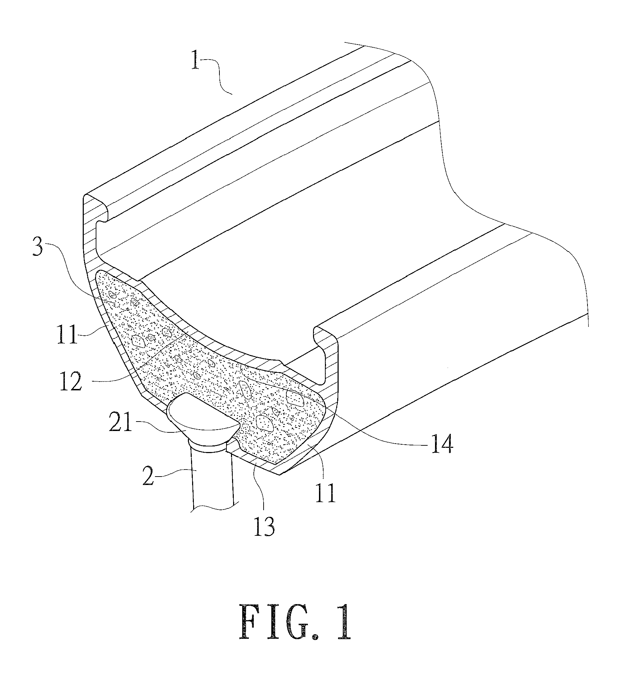

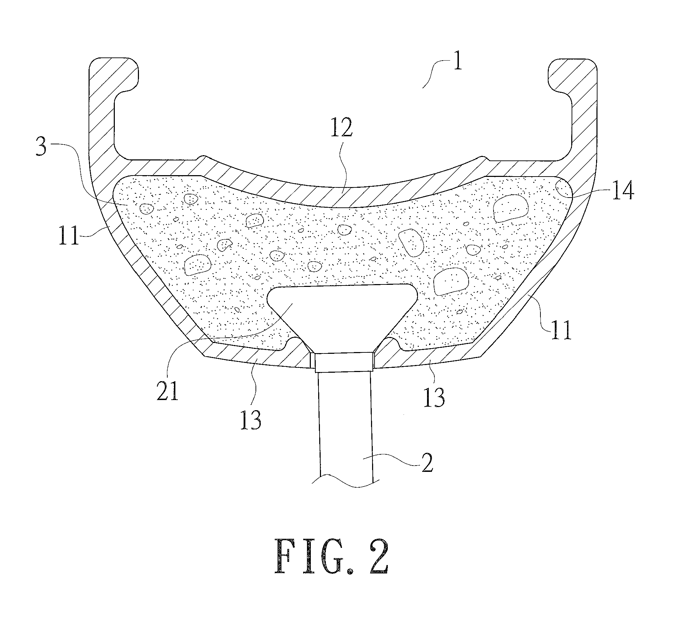

As shown in Fig. 1 and Fig. 2, a rim structure for a bike is disclosed. A rim (1) comprises two side walls (11), a connection wall (12) for connecting opposite end faces of the two side walls (11), an inner wall (13) for connecting the inner edges of the two side walls (11), and a space (14) defined by the two side walls (11), the connection wall (12) and the inner wall (13), wherein the inner wall (13) has a plurality of evenly-spaced spokes (2) thereon, each of which has a head (21) located inside the space (14), and wherein the space (14) is filled with a foam material to form an inner foam layer (3). As a result, the foam material filled in the space (14) wraps and limits the heads (21) of the plurality of spokes (2) in position, which promotes the strength and steadiness of the spokes (2) after being installed on the rim (1).

According to the above description, the connection wall (12) has a hole (not shown in figures) for filling the foam material. Preferably, the hole is drilled for an air tap of a wheel.

According to the above description, the rim (1) is made of aluminum alloy, titanium alloy, magnesium alloy or carbon fiber. The foam material of the inner foam layer (3) is selected from a group consisting of polystyrene, polypropylene, polyvinyl chloride, phenoplastics, and polyurethane.

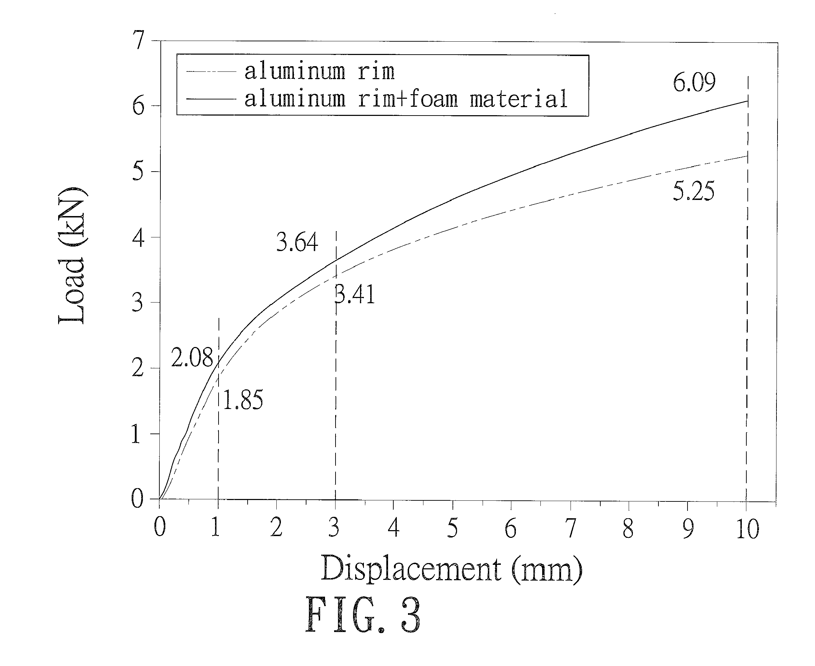

Furthermore, a three point bending test is conducted for measuring an aluminum rim and an aluminum rim filled with the foam material therein. A plot of the load (kN) versus the crack opening displacement (mm) is used to determine the load at which the crack starts growing. As shown in Fig. 3, the aluminum rim filled with the foam material shows increased strength and rigidity. Compared with the aluminum rim at the displacement of 1 mm and 10 mm, the aluminum rim filled with the foam material increases the strength and rigidity of 12.4% and 16%, respectively.

In addition, the shock-absorption ability of the aluminum rim filled with the foam material has been significantly improved. When the aluminum rim and the aluminum rim filled with the foam material bump the ground, the sound of the aluminum rim filled with the foam material is far less than that of the aluminum rim.

## Claims

1. A rim structure for a bike, comprising a rim (1) having two side walls (11), a connection wall (12) for connecting opposite end faces of the two side walls (11), an inner wall (13) for connecting the inner edges of the two side walls (11), and a space (14) defined by the two side walls (11), the connection wall (12) and the inner wall (13), wherein the inner wall (13) has a plurality of evenly-spaced spokes (2) thereon, each of which has a head (21) located inside the space (14), and wherein the space (14) is filled with a foam material to form an inner foam layer (3).

2. The rim structure for a bike as claimed in claim 1, wherein the connection wall (12) has a hole for filling the foam material.

3. The rim structure for a bike as claimed in claim 2, wherein the foam material of the inner foam layer (3) is selected from a group consisting of polystyrene, polypropylene, polyvinyl chloride, phenoplastics, and polyurethane.

4. The rim structure for a bike as claimed in claim 3, wherein the rim (1) is made of aluminum alloy, titanium alloy, magnesium alloy or carbon fiber.

5. The rim structure for a bike as claimed in claim 2, wherein the rim (1) is made of aluminum alloy, titanium alloy, magnesium alloy or carbon fiber.

6. The rim structure for a bike as claimed in claim 1, wherein the foam material of the inner foam layer (3) is selected from a group consisting of polystyrene, polypropylene, polyvinyl chloride, phenoplastics, and polyurethane.

7. The rim structure for a bike as claimed in claim 6, wherein the rim (1) is made of aluminum alloy, titanium alloy, magnesium alloy or carbon fiber.

8. The rim structure for a bike as claimed in claim 1, wherein the rim (1) is made of aluminum alloy, titanium alloy, magnesium alloy or carbon fiber.
